## Europäisches Patentamt

## European Patent Office

## Office européen des brevets

(11) Publication number: **0 182 752**
A2

# (12) EUROPEAN PATENT APPLICATION

(21) Application number: **85830278.9**

(22) Date of filing: **12.11.85**

(51) Int. Cl.⁴: **B 65 D 21/02**

(30) Priority: **13.11.84 US 670493**

(43) Date of publication of application: **28.05.86**
**Bulletin 86/22**

(84) Designated Contracting States: **AT BE CH DE FR GB IT LI NL SE**

(71) Applicant: **Novoa Alonso, Ildefonso, Avenida Angostura Qta. Maria de los Angeles, Ciudad Bolivar (VE)**

(72) Inventor: **Novoa Alonso, Ildefonso, Avenida Angostura Qta. Maria de los Angeles, Ciudad Bolivar (VE)**

(74) Representative: **Petraz, Gilberto Luigi, G.L.P. S.a.s. di Gilberto Petraz P.le Cavedalis 6/2, I-33100 Udine (IT)**

(54) **System to couple cylindrical elements together for containers.**

(57) This invention concerns a system for coupling and assembling cylindrical elements which form OLSO thermal containers or the like, such coupling and assembly originating by the elements being screwed at their upper and lower ends to perimetric extensions having externally and internally threaded surfaces; so as to divide and separate the volumetric capacity into segments, internal partitions are screwed within the elements instead of coupling rings.

"SYSTEM TO COUPLE CYLINDRICAL ELEMENTS TOGETHER FOR

CONTAINERS"

\*\*\*\*\*\*\*\*

This invention concerns a system to couple together cylindrical elements so as to obtain containers. To be more exact, the invention concerns a system to couple and assemble cylindrical elements which advantageously, but not necessarily, form thermal containers or the like.

Before this invention no system to couple cylindrical elements together for containers was known which provided the advantages which this invention entails.

The cylindrical containers known on the market at the present time are wholly formed of one single body which extends perimetrically throughout the whole length of the containers and has a constant volumetric capacity. Among other things, this fact entails as a consequence the employment of different moulds in the fabrication of containers of different sizes.

There also exist on the market various types of containers which can be divided into separate compartments, which are connected together on the basis of different principles and possess an unsatisfactory interconnection seal and stability between their zones of contact or connection.

By means of the coupling system of this invention all the drawbacks cited above are overcome, since such connection takes up a precise mechanical form with an excellent hydraulic seal and is obtained by screwing different elements together in a continuous form by means of inner coupling rings, whereas their assembly is achieved by means of outer threaded rings.

Moreover, the volumetric capacity of the container can be varied as required by screwing internal separation partitions and/or inner coupling rings, thus reducing or increasing respectively the number of elements in a practically limitless manner.

This invention is therefore embodied with a system to couple together cylindrical elements for containers and advantageously, but not ~~necessarily~~ *EXCLUSIVELY*, for thermal containers or the like, the system being characterized in that it comprises elements coupled together by outer threaded ring coupling means and/or inner ring coupling means, thus permitting or not permitting internal volumetric communication between such elements by means of inner connection rings or of internal separation partitions, and being also characterized in that such elements are coupled together by outer rings which mesh with relative outer threaded surfaces included on the elements.

The attached figures show, as a non-restrictive example, the various parts forming the system and also the coupling of such parts to obtain the desired container. The figures illustrate the following:-

Fig.1    is a side sectional view of an element;

Fig.2    is a view from above of a retainer ring coupled to the outer ring;

Fig.3    is a side sectional view of the outer ring;

Fig.4    is a side sectional view of the two coupled elements;

Fig.5    is a side sectional view of two coupled elements with an internal partition to separate the elements;

Fig.6    is a side sectional view of the container with

*Gilberto Petraz*

internal partitions and inner connection rings;

Fig.7    is a side view of the assembled container;

Fig.8    is a side sectional view of a container consisting of two elements with internal separation partitions;

Fig.9    is a side view of a container consisting of two assembled elements;

Fig.10    is a side sectional view of the upper portion of an upper element with a personal-use compartment screwed to such element;

Fig.11    is a side sectional view of the upper portion of an upper element with an outer ring attached to hold the handle;

Fig.12    is a front elevation view which shows the handle pivoted on the upper ring, with outer and inner screw threads.

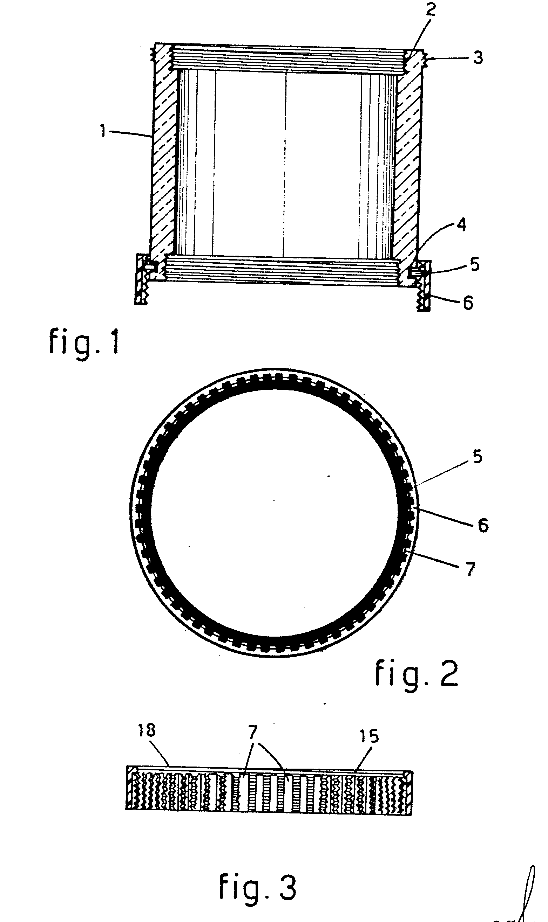

Fig.1 shows the specific shape of each element in a side sectional view according to an imaginary plane passing along the lengthwise axis of the element. It should be noted that the walls of the element 1 terminate at their upper end with a reduced thickness and comprise an inner threaded surface 2 and an outer threaded surface 3.

The lower zone of the element 1 has essentially the same shape as that of the upper zone except that, instead of having an outer threaded surface, it includes a perimetric recess, or lodgement, or slot 4 having a substantially parallelepiped shape, in which is lodged a retainer ring 5 that cooperates with an outer ring 6.

Such retainer ring 5 cooperates with the outer threaded ring 6 and with the walls of the lower zone of the element 1 and retains the outer ring 6 firmly.

Fig.2 shows the specific method of coupling the outer ring 6 to the retainer ring 5.

The retainer ring 5 has a cylindrical shape, and its outer

Gilberto Petraz

surface is grooved lengthwise in an equidistant manner; each groove accommodates accurately inner threaded ridges 7 comprised on the outer ring 6. Such inner threaded ridges 7 terminate at the upper zone of the ring 6 and create a continuous, upper, inner, threaded edge 15, which is not affected by such ridges 7 but comprises a continuity of screw threads, which therefore cover the inner surface of the outer ring 6 in a continuous manner.

The ridges of the retainer ring 5 mate with the lengthwise grooves comprised between the ridges 7 of the outer ring 6, such latter ridges 7 being limited in their upper zone by the continuous inner threaded edge 15 of the outer ring 6.

Such specific connection of the outer threaded ring 6 to the retainer ring 5 enables the assemblage of such two rings 5-6 to be rotated when the outer ring 6 is screwed onto, or unscrewed from, an element 1 which is to be added to the container.

This in turn enables the outer ring 6 to be displaced lengthwise in an upward or downward direction in relation to the retainer ring 5, its downward displacement being limited by the intermediate threaded edge 15 comprised within the outer ring 6.

For its extraction, the outer ring 6 is moved upwards along the grooved guides of the retainer ring 5 and thus proceeds without any hindrance, in this way permitting the retainer ring 5 to be freed.

Fig.3 shows the specific inner form of the outer ring 6, which comprises a threaded surface with lengthwise ridges 7 at equal distances apart; these ridges 7 are limited in their upper zone by a continuous, non-grooved, inner, threaded edge 15.

When the assemblage consisting of a retainer ring 5 and relative outer ring 6 is rotated, the outer ring 6 is screwed onto the upper, outer, threaded surface zone 3 of the next lower element 1 which is to be attached to the container, the outer ring 6 thus moving lengthwise in relation to the retainer ring 5 and coupling together two cylindrical elements 1 in a precise manner.

This is particularly advantageous when internal separator partitions 11 or personal-use compartments 13 are employed and when an inner connection ring 9 is used. In such cases the outer ring 6 acts as a double fastener system and prevents the accidental disengagement of any one of the cylindrical elements 1.

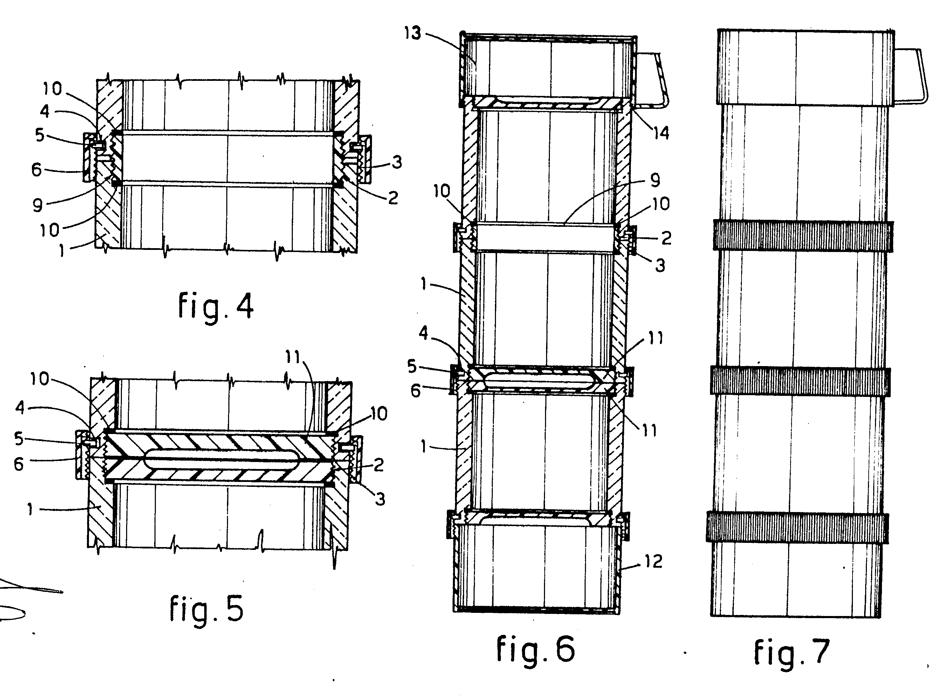

Fig.4 gives a side profile view of a detail of the connection of two cylindrical elements 1; the essential features of the system to couple the cylindrical elements 1 can be seen clearly.

It should be noted that an inner ring 9 threaded perimetrically and externally cooperates with the inner, lower threaded surface 2 of an upper cylindrical element 1 and with the inner, upper threaded surface 2 of a lower cylindrical element 1 and couples both such cylindrical elements 1 together in a precise manner, thus closing with a seal the inner space by means of packings 10 which adhere to the inner terminal edges of the cylindrical elements 1.

The outer ring 6 is caused to rotate externally on the assemblage so as to become screwed onto an outer threaded surface 3 of the lower cylindrical element 1.

The inner ring 9 makes possible the volumetric intercommunication of two cylindrical elements 1.

Fig.5, like Fig.4, shows the essential features of the coupling system but incorporates in this case internal partitions 11 to separate the cylindrical elements 1. Such internal partitions 11 comprise a perimetrically threaded surface, which is coupled to the upper, or lower, inner threaded surface 2 of each cylindrical element 1, being screwed thereon in a precise manner and thus separating the volumetric spaces within the cylindrical elements 1 to which such internal partitions are connected.

Each partition 11 is screwed individually onto its respective cylindrical element 1, thus compressing the sealing packing of the element, and comprises at its centre grip means, such as a hollow with a diametric ridge, so as to facilitate the gripping of the partition when it is to be tightened or slackened.

Fig.6 shows a container with cylindrical elements 1 coupled to a base compartment 12 and relative personal-use compartment 13. The base 12 has a substantially cylindrical shape and comprises an outer threaded surface at its upper perimetric zone, which is connected to the inner threaded zone of the outer threaded support ring 6.

The base 12 acts as a container for any inner ring 9 or separation partitions 11 not in use with the cylindrical elements 1.

The personal-use compartment 13, which comprises a threaded perimetric surface in its lower zone 14, is coupled to the upper cylindrical element 1 with the same principle, being screwed onto the outer threaded surface 3 of such upper cylindrical element.

It should be noted that in this figure the upper and intermediate cylindrical elements 1 are connected by the inner connecting ring 9 and by the outer ring 6, whereas the third and lowest cylindrical element 1 is connected to the intermediate cylindrical element 1 by means of the outer threaded ring 6 alone.

The inner separation partitions 11 in turn limit and shut off the internal intercommunication between the cylindrical elements 1.

Fig.6 shows a practical application of the interconnection of the volumes of the two upper cylindrical elements 1 by means of the inner connection ring 9, and also the division of volumes between the two lower cylindrical elements 1 by means of the opposed partitions 11.

Fig.7 gives an outside view of the container shown in Fig.6.

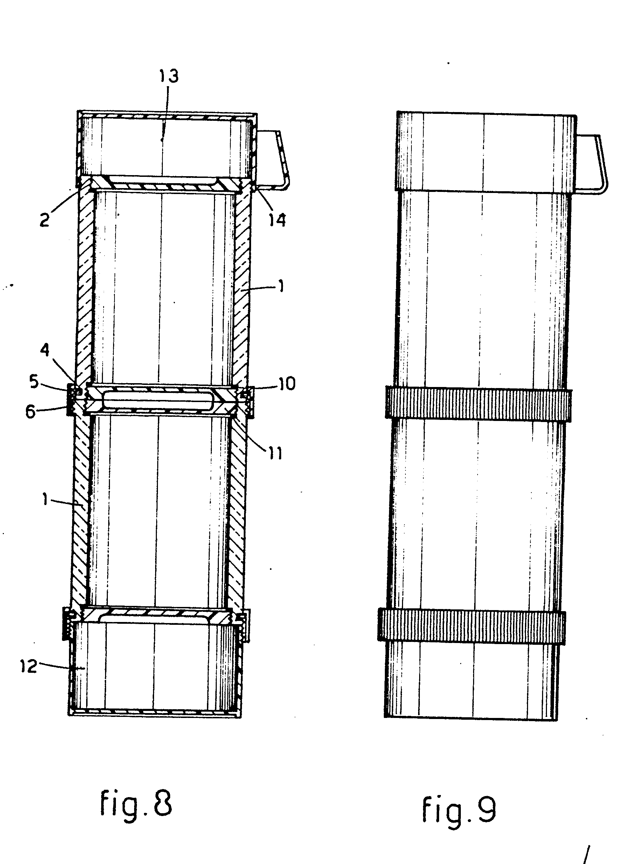

Fig.8 shows one of the variants which can be obtained according to the invention; here the container comprises only two volumes separated by opposed partitions 11.

Fig.9 is an outside view of the container shown in Fig.8.

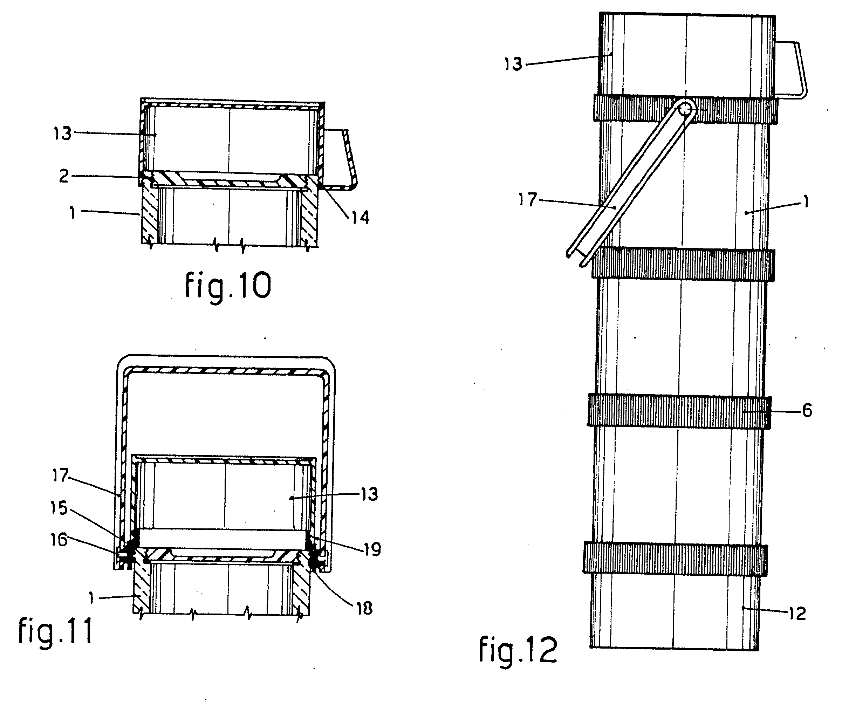

Fig.10 shows in particular a partial segment of the upper part of a container, in which the personal-use compartment 13 is coupled directly to the upper portion of the cylindrical element 1; this is an alternative method of use of the container without a handle.

Fig.11 shows in particular a well defined incorporation of a ring 15 in the upper threaded edge 3 of the upper cylindrical element of a container; the ring 15 comprises two tubular, diametrically opposed projections 16 which are to be engaged in the perforated ends of a U-shaped handle 17; such perforated ends are fixed in that position by means of elements inserted under pressure into lengthwise perforations comprised in the tubular projections 16, thus enabling the handle 17 to rotate in relation to the container.

Such ring 15 in the upper edge 3 of the container includes a lower, internally threaded area 18 and an upper, externally threaded area 19, such areas 18-19 serving as connections to the cylindrical element 1 and personal-use compartment 13 respectively of the container.

The above handle 17 is an alternative means provided for a user to employ or not, as he desires.

Fig.12 gives a side elevation of the container, with the

*Gilberto Petraz*

handle incorporated.

The cylindrical elements 1 may consist of a metal, a plastic material or glass and can be formed with a solid perimetric body or with a perimetric body made of two con- centric bodies.

## CLAIMS

****

1 - System to couple together cylindrical elements for containers, advantageously [BUT NOT EXCLUSIVELY] to obtain thermal containers or the like, the system being characterized in that it comprises cylindrical elements (1) coupled together by outer (6) or inner (9-11) means which permit, or do not permit, internal volumetric communication between such cylindrical elements (1), such outer means (6) being ring means connected to relative outer threaded surfaces (3) of such cylindrical elements (1).

2 - System as claimed in Claim 1, in which inner connecting rings (9) for volumetric intercommunication between the cylindrical elements (1) are screwed onto the interior of such cylindrical elements (1) to be coupled internally, thus joining together two consecutive cylindrical elements (1), the opposite ends of each inner connecting ring (9) cooperating with packings (10) which ensure an airtight closure between such cylindrical elements (1) and the inner connecting ring (9) owing to the pressure of tightening such inner ring (9) by screwing.

3 - System as claimed in Claim 1, in which internal partitions (11) to obtain volumetric separation comprise an outer screw thread cooperating with an internal threaded surface (2) of the cylindrical element (1), a packing (10) being included between such partition (11) and the cylindrical element (1) so as to obtain an airtight closure in such zone.

4 - System as claimed in Claims 1 and 3, in which the internal separation partition (11) comprises at its centre a grip means to facilitate screwing and unscrewing.

5 - System as claimed in Claims 1 and 2, which comprises an outer coupling ring (6) between the cylindrical elements (1), such outer ring (6) reinforcing the lengthwise connection of

0182752

- 10 -

such elements (1).

6 - System as claimed in Claims 1 and 3, in which the opposed cylindrical elements (1) separated by the internal separation partitions (11) are united by the outer connecting ring (6).

7 - System as claimed in any claim hereinbefore, in which the outer means coupling together the cylindrical elements (1) are defined by a toothed retainer ring (5) inserted in a perimetric slot (4) located in the outer lower area of each cylindrical element (1) and by the outer ring (6), which comprises inner lengthwise ridges (7) and an upper non-grooved edge (15) and includes also an internal screw thread throughout its whole length.

8 - System as claimed in Claims 1 and 7, in which a coupling is obtained between the teeth of the retainer ring (5) and the grooves embodied between the ridges (7) of the outer ring (6), thus permitting simultaneous rotation of both such rings (5-6) and an upward or downward displacement of the outer ring (6) in relation to the retainer ring (5), the system also providing the special feature that the outer ring (6) in its ascent is freed from its union with the retainer ring (5) and in its descent is restricted in its travel by its upper non-grooved edge (15).

9 - System as claimed in any claim hereinbefore, in which the union of the cylindrical elements (1) is obtained by screwing the outer ring (6) of one cylindrical element (1) onto the upper threaded surface (3) of the other cylindrical element (1) to be added.

10 - System as claimed in any claim hereinbefore, in which a base element (12) of the container is a receptacle to hold the inner rings (9) and internal partitions (11) when they are not in use.

11 - System as claimed in any claim hereinbefore, in which the container assemblage is equipped with an upper compartment

0182752

(13) screwed to the upper, outer threaded edge (3) of the topmost cylindrical element (1) of the container.

12 - System as claimed in any claim hereinbefore, in which a complementary ring (15) can be incorporated on the container to support a handle (17), such ring (15) comprising two diametrically opposed tubular projections (16) which engage the perforated ends of the U-shaped handle (17), such handle being secured by elements inserted under pressure into lengthwise openings in such projections (16).

13 - System as claimed in any claim hereinbefore, in which the complementary ring (15) to support the handle (17) comprises inner and outer threaded areas for its connection to the upper end (3) of the topmost cylindrical element (1) and upper compartment (13) of the container.

0182752

1/4

fig.1

fig. 2

fig. 3

fig. 7

fig. 6

fig. 4

fig. 5

0182752

3 / 4

fig.8

fig.9

fig.10

13

2

1

14

fig.11

17

15

16

1

13

19

18

fig.12

13

17

1

6

12

4/4

0182752